# DEMANDE DE BREVET EUROPEEN

(11) **EP 1 083 731 A2**
(43) Date de publication de la demande: **14.03.2001**
(21) Numéro de dépôt: 00500198.7
(22) Date de dépôt: 07.09.2000
(51) Int. Cl.: H04M 15/00

(54) **Système de routage d'appels téléphoniques**

(30) Priorité: 07.09.1999 ES 9901999
(71) Demandeur: Baltanás del Valle, Miguel, Granada 18013 (ES)
(72) Inventeur: Baltanás del Valle, Miguel, Granada 18013 (ES)

(57) **Abrégé**

Système de routage d'appels téléphoniques qui, se servant d'un microprocesseur (16) et de plusieurs périphériques permet de faire des appels téléphoniques par l'intermédiare de l'opérateur qui offre le meilleur tarif en fonction de l'heure, la date et la destination de ceux-ci. Ce système permet aussi de comptabiliser le temps de chacun des appels routés et, lui associant le tarif que l'opérateur possède pour chacun de ces appels, fournir le coût réel de ceux-ci; un compteur général où s'additionnent ces montants fournit une prévision réelle des frais téléphoniques.

## Description

### OBJET DE L'INVENTION

Ce mémoire descriptif complète une requête de Brevet d'Invention sur un système de routage de lignes téléphoniques dont l'intérêt est de permettre qu'un appel téléphonique soit traité par l'opérateur téléphonique qui offre le meilleur prix tarifé en fonction de la destination, de l'heure et de la date, ou d'autres variables déterminantes.

En même temps l'invention possède un registre d'appels qui permet de connaître la progression du coût des appels téléphoniques réalisés à travers ce système de routage, anticipant le montant des frais, grâce à un ensemble de dispositifs associés à un microprocesseur électronique doué d'un programme informatique créé à cette fin.

### DOMAINE DE L'INVENTION

Cette invention trouve son application dans l'industrie qui fabrique des éléments, des dispositifs et des systèmes applicables aux télécommunications, concrètement, dans l'industrie qui travaille à la fabrication de système de routage téléphoniques.

### ANTÉCÉDENTS DE L'INVENTION

Les opérateurs téléphoniques ne possèdent pas, généralement, un tarif unique pour toute la journée, ce qui fait que le prix d'un appel dépende de l'heure, ajoutant une variable temporelle aux divers tarifs existants en fonction de la destination de celui-ci.

D'autre part, le coût des appels faits à la même heure et avec la même destination peut varier en fonction de l'opérateur utilisé, puisque le manque d'unification dans les prix fait coexister différents tarifs pour des conditions d'horaires et de destination concrets.

Le demandeur connaît l'existence de systèmes de routage téléphonique capables d'effectuer un appel par l'intermédiaire de l'opérateur qui offre les meilleures conditions en fonction de sa destination, réalisant ce routage grâce au préfixe du téléphone appelé.

Nonobstant, le demandeur n'a pas de preuves de l'existence d'aucun système de routage qui permette de conduire les appels à travers l'opérateur le plus adéquat en fonction de la date et de l'heure où se fait l'appel. Il serait donc souhaitable de mettre à point un dispositif de ce genre qui puisse tenir compte des différences dans les tarifs appliqués par les opérateurs en fonction de cette variable.

De plus, et même s'il existe des compteurs qui permettent de connaître la durée des appels réalisés d'un poste de téléphone et calculer approximativement le coût total en fonction du tarif moyen, le demandeur ne connaît l'existence d'aucun dispositif qui puisse déterminer, à tout moment, le coût réel des appels, appliquant à chacun d'eux le tarif correspondant. Un dispositif de ce genre deviendrait ainsi un précieux outil de contrôle des frais téléphoniques.

### DESCRIPTION DE L'INVENTION

Le système de routage de lignes téléphoniques que propose cette invention constitue une vraie nouveauté dans son domaine d'application. Il permet d'incorporer aux fonctions conventionnelles des systèmes de routage téléphonique existant dans l'actualité, le routage des appels en fonction de la date et de l'heure de celui-ci ainsi que le contrôle exact des frais de téléphone.

En fait, l'invention est constituée à partir d'une unité centrale, elle-même formée d'un microprocesseur électronique avec le programme informatique approprié, qui réside dans une mémoire de celles habituellement employées dans les dispositifs et systèmes informatiques. Le programme dispose d'une mémoire ROM, destinée uniquement à lui-même, ainsi que d'une mémoire RAM de données conventionnelles et d'une mémoire I2C, servant à traiter les communications réalisées avec le protocole I2C.

L'unité centrale qui possède une quantité suffisante de ports d'entrée et de sortie, a un clavier et un display LCD en tant qu'interfaces, ainsi qu'un modem et un contrôleur de ligne téléphonique. Celui-ci agit sur les signaux de la ligne téléphonique et permet d'opérer sur eux, se matérialisant en une électronique spécifique en fonction du genre de ligne qu'il contrôle.

L'invention présente aussi un dispositif électronique, intégré dans le microprocesseur ou bien extérieur à lui, qui fournit la date et l'heure.

De la sorte, grâce au clavier et à l'écran LCD, il est possible d'introduire les caractéristiques horaires, économiques et techniques ainsi que les priorités sur n'importe quel opérateur téléphonique disponible, en fonction desquelles il est possible de router les différents appels téléphoniques réalisés du poste téléphonique associé par rapport à la date, à l'heure et à la destination de ceux-ci.

### DESCRIPTION DES DESSINS

Pour illustrer la description et dans le dessein d'aider à une meilleure compréhension des caractéristiques de l'invention qui est l'objet de ce mémoire, nous ajoutons ci-joint un plan qui représente les éléments suivants:

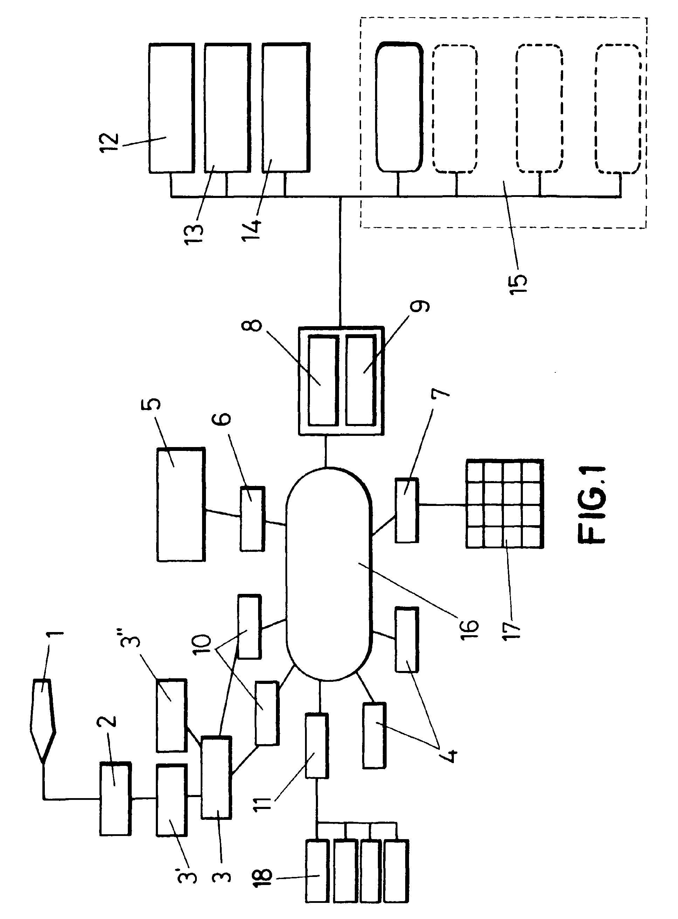

La figure numéro 1.- Elle montre un diagramme de blocs où l'on peut voir les différents dipositifs dont se compose l'invention et les lignes de transmission des données internes.

### RÉALISATION PRÉFÉRENTE DE L'INVENTION

Les figures montrent que le système de routage d'appels téléphoniques que l'on préconise, est constitué à partir d'une unité centrale où il y a un microprocesseur (16), branché aux éléments nécessaires d'alimentation et qui possède une mémoire de programme (12), où se trouve le programme informatique adéquat, une mémoire de données (13) et des banques de données IC2 (6), connectées au microprocesseur par le point de connexion E/S (11).

Une ligne téléphonique conventionnelle (1), accède au microprocesseur (16) par l'intermédiaire d'un modem (2), situé dans les ports E/S (10), qui se composent d'un contrôleur RS-232 (3) et des dispositifs associés (3') et (3").

Le microprocesseur (16) possède comme interfaces homme-machine un écran LCD (5), connecté au point de connexion E/S (6), et un clavier (17) connecté au point E/S(7).

Cette structure permet d'introduire les données sur les tarifs des opérateurs téléphoniques, en collaboration avec un dispositif électronique qui fournit la date et l'heure (14), et de router les appels téléphoniques à travers la ligne (1), vers l'opérateur le plus avantageux. À cette fin existent des contrôleurs de lignes téléphoniques (15), gérés par le microprocesseur (16) à travers un multiplexeur (8) et un sélecteur de mémoire (9).

D'un autre côté, le microprocesseur (16) est capable de comptabiliser le temps de chacun des appels routés et, associant le tarif que l'opérateur offre pour chacun d'eux, enregistrer le coût réel de ceux-ci. L'addition de ces sommes dans un compteur général permet d'obtenir une prévision réelle des frais téléphoniques.

Finalement on doit dire que le système de routage d'appels téléphoniques peut se configurer de trois manières différentes:
_ L'interface homme-machine est munie d'un display LCD et d'un clavier numérique qui permet d'actualiser les variables opportunes de fonctionnement et de consulter des rapports et des stastisques de la consommation réelle des services téléphoniques d'après chacun des opérateurs téléphoniques.
_ Le dispositif électronique aura également un modem branché à un port RS- 232 (3), qui lui permettra de se connecter, dans les deux sens, à un système informatique à distance, afin de pouvoir actualiser toutes les variables de tarifation, d'opérateurs, de destination, etc. pour un bon fonctionnement.

Cette information peut être offerte par une entreprise de services destinée à cette fin, pour éviter que l'utilisateur soit obligé de se tenir au courant des nombreuses actualisations que les opérateurs réalisent dans un temps déterminé.

Le système informatique à distance a un sfotware installé dans un PC serveur de réseau qui s'execute dans chaque terminal destiné à communiquer avec les systèmes de routage d'appels téléphoniques des usagers qui ont engagé ce service. Ce software actualise des tarifs et décharge des renseignements sur les appels réalisés par les usagers, afin qu'ils en consultent gratuitement l'extrait à travers un système branché sur Internet, moyennant, si l'usager le veut, un code personnel.
_ Étant donné la masse d'information que demande et doit traiter ce dispositif pour bien fonctionner, il est nécessaire d'inclure un autre port RS-232 (3') qui, de la même manière que le modem décrit ci-dessus, gère cette configuration / actualisation, grâce à un câble branché sur ce port et sur un PC et le software destiné à ce but.
_ Une autre caractéristique de fonctionnement de l'invention c'est de posséder une configuration qui donne la possibilité de contrôler la consommation des différents usagers, à travers un numéro d'usager et d'un code au moment de réaliser un appel.

Pour les grands établissements avec un grand nombre de lignes téléphoniques, cela permet d'effectuer un contrôle optimal de la consommation de chacun des membres qui utilisent les services téléphoniques.

Ce n'est pas nécessaire de prolonger cette description pour que n'importe quel expert en la matière comprenne la portée de l'invention et les avantages qui s'en dérivent.

Les matériaux, les formes, les dimensions et la disposition des éléments pourront être soumis à des variations, pourvu que cela n'entraîne une altération fondamentale de la nature de l'invention.

Les termes employés dans l'exposition de ce mémoire doivent être interprétés au sens large et non restrictif.

## Revendications

1. Système de routage d'appels téléphoniques, qui permet de faire les appels téléphoniques par l'intermédiaire de l'opérateur qui offre la meilleur tarification en fonction de l'heure, la date et la destination de ceux-ci. Ce système est construit à partir d'une unité centrale munie d'un microprocesseur (16), possédant les éléments d'alimentation nécessaires, une mémoire de programme (12) où se trouve le programme informatique créé à cette fin, une mémoire de données (13) et des banques de données 12C (18), reliées au microprocesseur par le point de connexion E/S (11). Le microprocesseur (16) accède à une ligne téléphonique conventionnelle (1) à travers un modem (2), logé dans les ports E/S (10), qui se composent d'un contrôleur RS-232 (3) et des dispositifs associés (3') et (3"). Le microprocesseur a comme interfaces homme-machine un écran LCD (5), associé au point de connexion E/S (6) et un clavier (17) associé lui au point E/S (7), pour pouvoir introduire les données sur les tarifs des opérateurs téléphoniques et en collaboration avec un dispositif électronique qui tient compte de la date et de l'heure (14). Cela lui permet de router les appels téléphoniques par la ligne (1) vers l'opérateur le plus avantageux. À cette fin, le micoprocesseur (16) gère des contrôleurs de lignes téléphoniques (15), à travers un multiplexeur (8) et un sélecteur de mémoire (9).

2. Système de routage d'appels téléphoniques d'après la revindication ci-dessus, caractérisé parce que le microprocesseur (16) est capable de comptabiliser le temps de chaque appel routé et en lui associant le tarif que l'opérateur a pour chacun de ces appels d'obtenir le coût réel de ceux-ci et de fournir, grâce à un compteur général où s'additionnent ces montants, une prévision réelle des frais téléphoniques.
